Europäisches Patentamt

European Patent Office

Office européen des brevets

(11) Numéro de publication : **0 075 505**
**B1**

(12) **FASCICULE DE BREVET EUROPÉEN**

(45) Date de publication du fascicule du brevet :
21.01.87

(21) Numéro de dépôt : 82401637.2

(22) Date de dépôt : 08.09.82

(51) Int. Cl.⁴ : **B 60 T 13/24**

(54) Procédé et appareil de réglage de course morte d'un maître-cylindre et unité de commande de freinage ajustée par la mise en oeuvre de ce procédé.

(30) Priorité : 22.09.81 FR 8117839

(43) Date de publication de la demande :
30.03.83 Bulletin 83/13

(45) Mention de la délivrance du brevet :
21.01.87 Bulletin 87/04

(84) Etats contractants désignés :
DE GB IT

(56) Documents cités :
DE-A- 1 630 150
DE-A- 2 208 762
DE-A- 2 326 415
US-A- 4 227 371

(73) Titulaire : BENDIX France
126, rue de Stalingrad
F-93700 Drancy (FR)

(72) Inventeur : Meynier, Guy
13 allée des Sycomores
F-93140 Bondy (FR)

(74) Mandataire : Le Moenner, Gabriel et al
SERVICE BREVETS BENDIX 44, Rue François 1er
F-75008 Paris (FR)

Jouve, 18, rue St-Denis, 75001 Paris, France

## Description

L'invention a pour objet un procédé de réglage de la course morte du ou des pistons d'un maître-cylindre monté à l'extrémité d'un servomoteur d'assistance, typiquement du type à dépression.

L'invention vise également une unité de commande de freinage constituée d'un maître-cylindre associé à un tel servomoteur d'assistance et dont la course morte de freinage a été déterminée par la mise en œuvre du procédé mentionné ci-dessus.

L'invention concerne plus particulièrement un procédé de réglage de course morte d'un piston d'un maître-cylindre monté à l'extrémité d'un servomoteur d'assistance de freinage comportant un boîtier, et un piston d'assistance couplé au piston du maître-cylindre, le piston d'assistance étant sollicité élastiquement vers la partie arrière du boîtier du servomoteur, le procédé comprenant les étapes d'assembler au moins la plus grande partie des éléments du maître-cylindre et du servomoteur en laissant provisoirement une butée déplaçable axialement et de déplacer axialement la butée d'une valeur prédéterminée à partir d'une position de référence, et à la verrouiller dans la position ainsi atteinte.

Un procédé de ce type est décrit dans le document US-A-4 227 371 qui concerne une structure particulière d'unité de commande de freinage dans laquelle la butée de réglage, portée par la tige d'entrée du servomoteur et coopérant avec un organe stationnaire solidaire du boîtier du servomoteur, est déplacée relativement à la tige d'entrée pour placer en premier lieu, au repos, la valve du servomoteur dans une configuration neutre, avec le piston d'assistance dans une position d'équilibre mixte pneumatique/mixte, décalée de la partie arrière du boîtier, puis, dans un second lieu, pour réduire la course morte de freinage du piston de maître-cylindre en faisant avancer complémentairement le piston d'une distance prédéterminée tenant compte des chaînes de tolérances pour un type d'unité de commande de freinage donné.

La présente invention a pour objet de proposer un procédé de réglage et une unité de commande de freinage de conception simple, permettant une grande précision de réglage, facile et rapide à mettre en œuvre industriellement, de faibles coûts de production, et ne nécessitant pas de modifications profondes des éléments constitutifs de l'unité de commande.

Pour ce faire, selon un aspect de l'invention, le procédé de réglage de course morte du piston de maître-cylindre comprend les étapes de déplacer axialement par rapport au boîtier la butée, contre laquelle est sollicité en appui le piston d'assistance, tout en testant, de façon connue en soi, la communication entre au moins un orifice d'alimentation du maître-cylindre et de la chambre de pression qui lui correspond, de repérer la position de référence de la butée qui donne lieu à l'amorce d'une telle communication, et de solidariser définitivement la butée au boîtier après l'avoir déplacée de ladite valeur prédéterminée.

Le document EP-A-0 040 945, publié le 2 décembre 1981, décrit par ailleurs un assemblage très particulier de maître-cylindre et de servomoteur d'assistance dans lequel le corps de maître-cylindre est solidarisé à un tube traversant axialement le servomoteur et où le réglage de la course morte du piston de maître-cylindre s'effectue en déplaçant axialement le sous-ensemble constitué par le corps de maître-cylindre et le tube par rapport au boîtier de servomoteur et aux pistons du servomoteur et du maître-cylindre au moyen d'une bague filetée immobilisée axialement dans le boîtier de servomoteur, suivant un agencement très délicat et onéreux, et difficile à industrialiser.

L'invention concerne aussi une unité de commande de freinage pour véhicule automobile, du type comportant un maître-cylindre et un servomoteur d'assistance pré-assemblés, dont la course morte du maître-cylindre est ajustable par mise en œuvre du procédé précité, caractérisée en ce que ladite butée, définissant la position de repos dudit piston d'assistance sollicité en appui contre cette butée, est sertie dans une portion d'extrémité tubulaire axiale du boîtier du servomoteur du côté de l'organe d'actionnement de celui-ci.

L'invention sera mieux comprise et d'autres détails et avantages de celle-ci apparaîtront mieux à la lumière de la description qui va suivre donnée uniquement à titre d'exemple et faite en référence aux dessins annexés dans lesquels :

la figure 1 illustre une unité de commande de freinage au moment de la mise en œuvre du procédé selon l'invention ;

la figure 2 est une vue de détail de l'encadré II de la figure 1, avant l'immobilisation définitive de la butée ;

la figure 3 est une vue analogue à celle de la figure 2 après immobilisation définitive de la butée ; et

la figure 4 est une vue suivant la flèche IV de la figure 3.

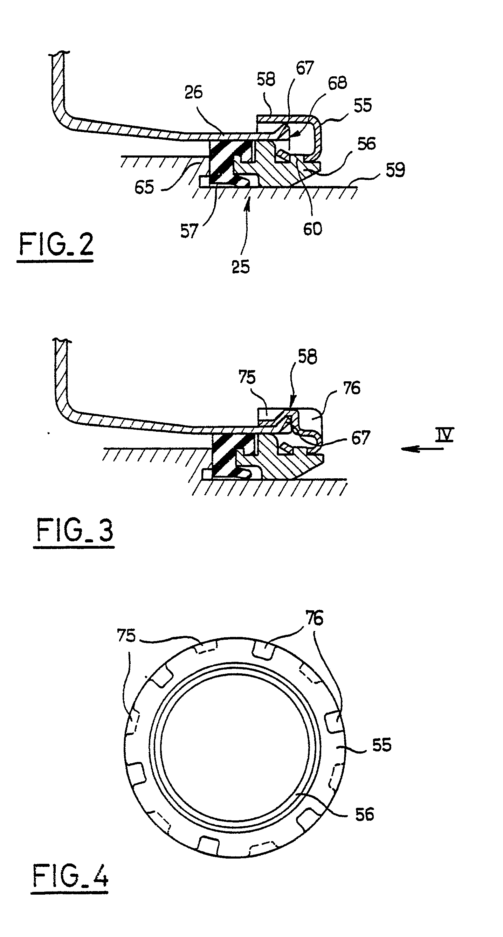

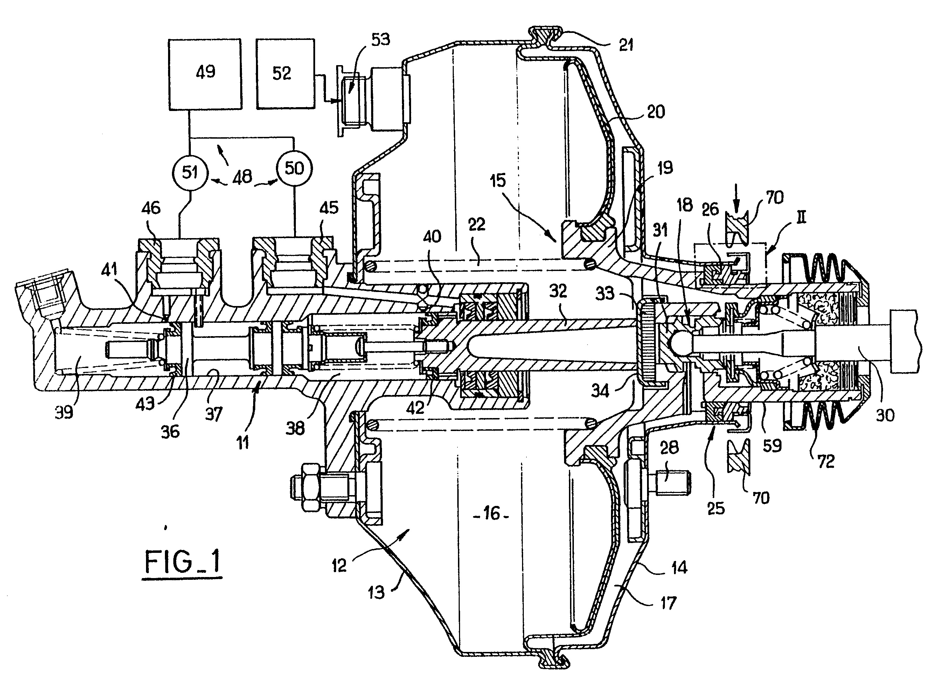

Une unité de commande de freinage à laquelle s'applique l'invention se compose d'un maître-cylindre 11 et d'un servomoteur d'assistance 12, du type à dépression. Le servomoteur 12 est pour l'essentiel classique et se compose d'un boîtier constitué de l'assemblage de deux coquilles 13 et 14 abritant un piston d'assistance 15, lequel partage ledit boîtier en deux chambres 16 et 17, susceptibles d'être isolées l'une de l'autre par un mécanisme de vanne à trois voies 18 logé dans un corps central 19 du piston d'assistance. Outre ce corps central 19, le piston d'assistance 15 comporte une membrane flexible 20 munie d'un bourrelet périphérique externe 21 enserré entre les bords d'assemblage des coquilles 13 et 14. Un ressort 22 monté à l'intérieur de la chambre 16 sollicite le piston d'assistance 15 vers sa position de repos, c'est-à-dire en appui contre une butée 25 dont les caractéristiques particulières ont été dictées par la nature du procédé de réglage selon l'invention. Cette butée 25 sera décrite en détail plus loin mais on notera que dans la représentation de la figure 1 elle est encore déplaçable axialement par rapport au boîtier et plus particulièrement par rapport à une portion d'extrémité 26 tubulaire, axiale, de la coquille 14 dudit boîtier, c'est-à-dire la coquille arrière de celui-ci, destinée à être assemblée à la paroi de feu du véhicule, au moyen de vis 28. L'organe d'actionnement 30 de l'unité de commande de freinage, destiné à être relié à la pédale de frein du véhicule est connecté par rotule au clapet mobile 31 de la vanne 18 qui se déplace coaxialement dans la direction du piston primaire 32 du maître-cylindre 11, avec interposition classique d'un disque élastique de réaction 33. Cependant, le piston 32 est directement en appui contre une coupelle métallique 34 maintenant le disque de réaction 33 à l'intérieur du corps central 19. Autrement dit, la tige de poussée de longueur réglable qu'on avait coutume d'interposer entre le disque 33 et le piston 32 est supprimée puisque le rattrapage de tolérances que cette tige permettait, devient inutile du fait du procédé de réglage conforme à l'invention.

Le maître-cylindre 11 est monté à l'extrémité de la coquille 13. Il s'agit d'un maître-cylindre double tout à fait conventionnel et comportant donc deux pistons respectivement un piston primaire 32 et un piston secondaire 36 définissant à l'intérieur de l'alésage 37 dudit maître-cylindre deux chambres de pression, respectivement une chambre primaire 38 et une chambre secondaire 39. Un orifice d'alimentation et de compensation 40 débouche dans la chambre primaire 38 et un orifice d'alimentation et de compensation 41, analogue, débouche dans la chambre de pression secondaire 39. Le piston 32 porte une garniture d'étanchéité 42 à son extrémité et le piston 36 porte une garniture d'étanchéité 43 analogue. Les orifices 40 et 41 sont destinés à être reliés au réservoir de liquide de frein par l'intermédiaire d'embouts de raccordement 45 et 46 respectifs. Pendant la mise en œuvre du procédé, les embouts 45 et 46 sont provisoirement connectés à un circuit de circulation de fluide 48. Dans l'exemple représenté, ce circuit comporte une source de dépression 49 reliée aux embouts 45 et 46 par l'intermédiaire de détecteurs pneumatiques appropriés 50, 51, respectifs. Une autre source de dépression est reliée à l'embout 53 de la chambre 16 du servomoteur pour simuler les conditions de fonctionnement normal de ce dernier.

Comme mentionné précédemment, la course morte du maître-cylindre est définie comme étant la distance entre le bord de la lèvre externe de la garniture d'étanchéité 42 ou 43 et l'arête la plus éloignée de ce bord de lèvre de l'orifice d'alimentation 40 ou 41 correspondant et dans la position de repos du piston 32 ou 36 correspondant. Dans le cas d'un maître-cylindre double comme celui qui est représenté, c'est la plus petite des deux distances considérées qu'on cherche à rendre égale à la course morte prédéterminée de valeur réduite, pour être certain que les deux orifices 40 et 41 soient découverts en dehors d'une phase de freinage.

Les particularités de la butée 25 apparaissent clairement sur les figures 2 et 3. Cette butée se compose de trois parties à savoir une bague de fixation 55, une bague de guidage 56 et un joint d'étanchéité annulaire 57, la bague de fixation 55 est la partie qui est destinée à être solidarisée par sertissage à l'extrémité tubulaire axiale 26 de la coquille 14. Cette bague, métallique, fait saillie au-delà de la portion d'extrémité 26 et comporte une partie recourbée 58 en chevauchement par rapport à ladite portion d'extrémité. Avant la mise en œuvre du procédé, la partie recourbée 58 est sensiblement cylindrique. La bague de guidage 56, en matériau rigide, est intercalée entre la paroi interne de la portion d'extrémité 26 et une surface cylindrique 59 du corps central 19. Cette bague de guidage porte la bague de fixation 55 grâce à des plots 60 engagés dans des trous correspondants de la bague 55. Le joint d'étanchéité 57 est quant à lui logé à l'intérieur de la portion d'extrémité 26, assurant l'étanchéité entre celle-ci et la partie cylindre 59 du corps 19. Il est fixé à la bague de guidage 56. Ainsi, les trois éléments 55, 56 et 57 de la butée 25 sont liés les uns aux autres et l'ensemble peut se déplacer axialement par rapport à la portion d'extrémité 26, tant que la bague de fixation 55 n'a pas été déformée par un sertissage. Le corps central 19 du piston d'assistance 15 comporte un épaulement annulaire 65 adjacent à la partie cylindrique 59 et c'est cet épaulement qui vient prendre appui contre le joint 57 de la butée 25 dans la position de repos du système. Pour une meilleure exécution du sertissage mentionné ci-dessus, le bord libre 67 de la portion d'extrémité 26 est légèrement recourbé radialement vers l'extérieur et comporte des crans 68 emboutis et répartis régulièrement à sa périphérie. Lorsque l'unité de commande de freinage constituée du maître-cylindre et du servomoteur pré-assemblés est installée sur l'appareil de réglage de course morte selon l'invention, des outils de poinçonnage 70 sont disposés circonférentiellement à intervalles réguliers en regard du bord 67. Ils comportent des poinçons décalés pour déformer la partie cylindrique 58 de part et d'autre de ce bord. Au début du procédé de réglage, le circuit de circulation de fluide 48 est branché aux embouts 45 et 46, le servomoteur est placé sous dépression par le raccordement de la source 52 et l'unité de commande est placée comme mentionné ci-dessus de façon que les outils de poinçonnage 70 soient correctement positionnés par rapport à la portion d'extrémité 26, la butée 25 ayant la forme illustrée à la figure 2 et le soufflet de protection 72 de la partie arrière du corps central 19 étant provisoirement replié en éloignement de la zone de poinçonnage. On déplace alors la butée 25 dans son ensemble vers la gauche en considérant la figure 1, de façon que les deux orifices 40 et 41 soient obturés par les garnitures d'étanchéité 42 et 43 respectives. Puis on déplace progressivement la butée 25 vers la droite, en considérant la figure 1, tout en testant la communication entre l'orifice 41 et la chambre 39 d'une part et l'orifice 40 et la chambre 38 d'autre part, grâce aux détecteurs pneumatiques 50 et 51. Pendant ce déplacement, une première mise en communication s'opère ; pour des raisons de construction, on observera généralement une communication entre l'orifice 41 et la chambre 39. En poursuivant encore le déplacement, vers la droite, de la butée 25, on repère une position de référence de ladite butée donnant lieu à l'amorce d'une communication entre l'orifice 40 et la chambre 38, c'est-à-dire la position correspondant à l'amorce d'une communication entre un orifice d'alimentation et la chambre de pression correspondante intervenant en second lieu, après la mise en communication de l'orifice 41 avec la chambre 39. Cette position de référence étant repérée, on déplace la butée 35 dans le même sens d'une valeur prédéterminée à partir de ladite position de référence et on actionne les outils de poinçonnage 70. De préférence, ces derniers sont conformés pour imprimer dans la partie recourbée 58 de la bague de fixation 55 deux séries de crans 75 et 76, circonférentiellement alternés et respectivement situés de part et d'autre du bord 67 de la portion d'extrémité 26, comme le montrent les figures 3 et 4.

Bien entendu, le procédé qui vient d'être décrit peut subir de nombreuses modifications. En particulier la façon de tester la communication entre un orifice d'alimentation et la chambre de pression correspondante peut être modifiée. On peut par exemple utiliser un circuit de circulation de fluide comportant une source d'air comprimé au lieu de la source de dépression 49. Cette source d'air comprimé serait alors de préférence connectée aux sorties des chambres de pression du maître-cylindre pour que les garnitures d'étanchéité 42, 43 restent appliquées contre la paroi interne de l'alésage du maître-cylindre pendant l'exécution du procédé. C'est dire que l'invention couvre tous les équivalents techniques des moyens mis en jeu si ceux-ci le sont dans le cadre des revendications qui suivent.

## Revendications

1. Procédé de réglage de course morte d'un piston d'un maître-cylindre (11) monté à l'extrémité d'un servomoteur d'assistance de freinage (12) comportant un boîtier (13, 14) et un piston d'assistance (15) couplé au piston (32) du maître-cylindre, le piston d'assistance (15) étant sollicité élastiquement vers la partie arrière (14) du boîtier du servomoteur (12), le procédé comprenant les étapes d'assembler au moins la plus grande partie des éléments du maître-cylindre (11) et du servomoteur (12) en laissant provisoirement une butée (25) déplaçable axialement, de déplacer axialement la butée d'une valeur prédéterminée à partir d'une position de référence, et de la verrouiller dans la position ainsi atteinte, caractérisé en ce qu'il comprend les étapes de déplacer axialement par rapport au boîtier (13, 14) la butée (25), contre laquelle est sollicité en appui le piston d'assistance (15), tout en testant, de façon connue en soi, la communication entre au moins un orifice d'alimentation (40, 41) du maître-cylindre et la chambre de pression (38, 39) qui lui correspond, de repérer la position de référence de la butée (25) qui donne lieu à l'amorce d'une telle communication, et de solidariser définitivement la butée (25) au boîtier après l'avoir déplacée de ladite valeur prédéterminée.

2. Procédé selon la revendication 1, caractérisé en ce qu'il consiste à tester ladite communication à l'aide d'un circuit de circulation de fluide (48) connectable audit orifice d'alimentation (40 ou 41).

3. Procédé selon la revendication 1 ou 2, pour un maître-cylindre double comportant deux orifices d'alimentation et deux chambres de pression indépendantes, caractérisé en ce qu'il consiste à tester ladite communication entre chaque orifice d'alimentation (40, 41) et la chambre de pression (38, 39) correspondante en déplaçant ladite butée à partir d'une position pour laquelle les deux communications sont interrompues et à prendre en compte en tant que position de référence la position de ladite butée qui donne lieu à l'amorce d'une communication entre un orifice d'alimentation et la chambre de pression correspondante intervenant après la mise en communication de l'autre orifice d'alimentation avec l'autre chambre de pression.

4. Procédé selon l'une des revendications précédentes, caractérisé en ce que la butée (25) est solidarisée par sertissage à la partie arrière du boîtier du servomoteur.

5. Procédé selon l'une des revendications précédentes, caractérisé en ce qu'on place le servomoteur sous dépression avant de rechercher ladite position de référence.

6. Unité de commande de freinage pour véhicule automobile, du type comportant un maître-cylindre (11) et un servomoteur (12) à piston d'assistance (15), préassemblés et dont la course morte du maître-cylindre est ajustable par mise en œuvre du procédé selon l'une des revendications 1 à 5, caractérisée en ce que ladite butée (25), définissant la position de repos dudit piston d'assistance (15) sollicité en appui contre cette butée, est sertie dans une portion d'extrémité (26) tubulaire, axiale, du boîtier (12) du servomoteur, du côté de l'organe d'actionnement de celui-ci.

7. Unité de commande de freinage selon la revendication 6, caractérisée en ce que la butée (25) comporte une bague de fixation (55) métallique faisant saillie au-delà de la portion d'extrémité (26) et comportant une partie recourbée (58) en chevauchement par rapport à la portion d'extrémité (26) et en ce que cette bague de fixation est sertie circonférentiellement à la portion d'extrémité, par emboutissage radial.

8. Unité de commande de freinage selon la revendication 7, caractérisée en ce que la butée (25) comporte une bague de guidage (56), rigide, intercalée entre la paroi interne de la portion d'extrémité (26) et une surface cylindrique (59) d'un corps central (19) du piston d'assistance (15), la bague de guidage portant la bague de fixation (55).

9. Unité de commande de freinage selon la revendication 8, caractérisée en ce que la butée (25) comporte un joint d'étanchéité annulaire (57) logé à l'intérieur de la portion d'extrémité (26) du boîtier (13, 14) assurant l'étanchéité entre celui-ci et la partie cylindrique (59) dudit corps central et fixé à la bague de guidage (56), et en ce que le corps central (19) comporte un épaulement annulaire (65) venant prendre appui contre ledit joint d'étanchéité dans la position de repos du servomoteur.

**Claims**

1. A method of regulating the lost mostion of a piston of a master cylinder (11) mounted on the extremity of a brake servo-motor (12) comprising a casing (13, 14) and a servo-piston (15) coupled to the piston (32) of the master cylinder, the servo-piston (15) being resiliently biased towards the rear portion (14) of the casing of the servo-motor (12), the method comprising the steps of assembling at least the major part of the elements of the master cylinder (11) and of the servo-motor (12) provisionally leaving an abutment (25) to be axially displaceable, axially displacing the abutment by a predetermined value from a reference position, and locking it in the position obtained thereby, characterized in that it comprises the steps of axially displacing, with respect to the casing (13, 14), the abutment (25) which the servo-piston (15) is urged into engagement with, while testing, in a manner known *per se*, the communication between at least one supply orifice (40, 41) of the master cylinder and the pressure chamber (38, 39) which corresponds thereto, determining the reference position of the abutment (25) which results in the initiation of such a communication, and definitely fixing the abutment (25) to the casing after having it displaced by said predetermined value.

2. The method of claim 1, characterized in that it comprises testing said communication by means of a fluid circulating circuit (48) connectable to said supply orifice (40 or 41).

3. The method of claim 1 or claim 2 for a double-master cylinder comprising two supply orifices and two independent pressure chambers, characterized in that it comprises testing said communication between each supply orifice (40, 41) and the corresponding pressure chamber (38, 39) by displacing said abutment from a position wherein the two communications are interrupted, and chosing as reference position the position of said abutment which results in initiation of a communication between a supply orifice and the corresponding pressure chamber which occurs after effecting communication of the other supply orifice with the other pressure chamber.

4. The method of any of the preceding claims, characterized in that the abutment (25) is fixed by being stamped to the rear portion of the casing of the servomotor.

5. The method of any of the preceding claims, characterized in that the servo-motor is subjected to subatmospheric pressure before determining said reference position.

6. A brake control unit for an automotive vehicle of the type comprising a master cylinder (11) and a servomotor (12) including a servo-piston (15), which are preassembled and the master cylinder of which has a lost-motion adjustable by the method of any of claims 1 to 5, characterized in that said abutment (25) defining the rest position of said servo-piston (15) and urged into engagement with said abutment, is stamped into an axial tubular end portion (26) of the casing (12) of the servo-motor on the side of the actuating member thereof.

7. The brake control unit according to claim 6, characterized in that the abutment (25) comprises a metallic fixing ring (55) projecting beyond the end portion (26) and comprising a rebent portion (58) straddling the end portion (26), and in that said fixing ring is circumferentially stamped to the end portion by radial embossment.

8. The brake control unit according to claim 7, characterized in that said abutment (25) comprises a rigid guide ring (56) interposed between the internal wall of the end portion (26) and a cylindrical surface (59) of a central body (19) of the servopiston, the guide ring supporting the fixing ring (55).

9. The brake control unit according to claim 8, characterized in that the abutment (25) comprises an annular sealing ring (57) positioned within the end portion (26) of the casing (13, 14) to provide for sealing of the latter and the cylindrical portion (59) of said central body, and fixed to the guide ring (56), and in that the central body (19) comprises an annular shoulder (25) engaging said sealing ring in the rest position of the servomotor.

**Patentansprüche**

1. Verfahren zum Einstellen des Totgangs eines Kolbens eines Hauptzylinders (11), der am Ende eines Servobremsmotors (12) angebracht ist, welcher ein Gehäuse (13, 14) sowie einen mit dem Kolben (32) des Hauptzylinders gekoppelten Servokolben (15) aufweist, wobei der Servokolben (15) in Richtung auf den hinteren Teil (14) des Gehäuses des Servomotors (12) elastisch vorgespannt ist, wobei das Verfahren die Schritte umfaßt: daß zumindest der größere Teil der Bauteile des Hauptzylinders (11) und des Servomotors (12) zusammengebaut werden, während man einen Anschlag (25) zunächst axial verschiebbar läßt, daß der Anschlag aus einer Bezugsstellung um einen vorgegebenen Wert axial verschoben wird und er in der auf diese Weise erhaltenen Stellung festgelegt wird, dadurch gekennzeichnet, daß das Verfahren folgende Schritte umfaßt : der Anschlag (25), gegen den der Servokolben (15) angedrückt wird, wird bezüglich des Gehäuses (13, 14) axial verschoben, während man in an sich bekannter Weise die Verbindung zwischen mindestens einer Zufuhröffnung (40, 41) des Hauptzylinders und der entsprechenden Druckkammer (38, 39) überprüft, die Bezugsstellung des Anschlags (25), die den Beginn einer derartigen Verbindung ermöglicht, wird bestimmt, und der Anschlag (25) wird mit dem Gehäuse endgültig fest verbunden, nachdem er um den vorgegebenen Wert verschoben worden ist.

2. Verfahren nach Anspruch 1, dadurch gekennzeichnet, daß die besagte Verbindung mit Hilfe eines Strömungsmittelkreises (48) geprüft wird, der mit der besagten Zufuhröffnung (40 oder 41) verbindbar ist.

3. Verfahren nach Anspruch 1 oder 2 für einen doppelten Hauptzylinder mit zwei Zufuhröffnungen und zwei unabhängigen Druckkammern, dadurch gekennzeichnet, daß die Verbindung zwischen jeder Zufuhröffnung (40, 41) und der entsprechenden Druckkammer (38, 39) geprüft wird, indem der Anschlag aus einer Stellung, in der die beiden Verbindungen unterbrochen sind, verschoben wird, und daß als Bezugsstellung diejenige Stellung des Anschlags gewählt wird, die den Beginn einer Verbindung zwischen einer Zufuhröffnung und der entsprechenden Druckkammer ermöglicht, nachdem die andere Zufuhröffnung mit der anderen Druckkammer verbunden worden ist.

4. Verfahren nach einem der vorhergehenden Ansprüche, dadurch gekennzeichnet, daß der Anschlag (25) durch eine Prägeverformung am hinteren Abschnitt des Gehäuses des Servomotors festgelegt wird.

5. Verfahren nach einem der vorhergehenden Ansprüche, dadurch gekennzeichnet, daß der Servomotor unter Unterdruck gesetzt wird, ehe die Bezugsstellung bestimmt wird.

6. Bremssteuereinheit für ein Kraftfahrzeug mit einem Hauptzylinder (11) und einem Servomotor (12) mit Servokolben (15), die vormontiert sind und bei denen der Totgang des Hauptzylinders mit dem Verfahren nach einem der Ansprüche 1-5 verstellbar ist, dadurch gekennzeichnet, daß der Anschlag (25), der die Ruhestellung des gegen den Anschlag vorgespannten Servokolbens (15) bestimmt, auf der Seite des Betätigungselementes des Servomotors in einen axialen rohrförmigen Endabschnitt (26) des Gehäuses (12) des Servomotors hinein verformt wird.

7. Bremssteuereinheit nach Anspruch 6, dadurch gekennzeichnet, daß der Anschlag (25) einen metallischen Fixierring (55) aufweist, der über den Endabschnitt (26) hinaus vorsteht und der einen gekrümmten Abschnitt (58) aufweist, welcher den Endabschnitt (26) umgreift, und daß dieser Fixierring durch einen radialen Prägevorgang auf den Endabschnitt umfangsmäßig aufgepreßt wird.

8. Steuerbremseinheit nach Anspruch 7, dadurch gekennzeichnet, daß der Anschlag (25) einen starren Führungsring (56) aufweist, der zwischen die Innenwand des Endabschnittes (26) und eine zylindrische Fläche (59) eines zentralen Körpers (19) des Servokolbens (15) eingesetzt ist, wobei der Führungsring den Fixierring (55) trägt.

9. Steuerbremseinheit nach Anspruch 8, dadurch gekennzeichnet, daß der Anschlag (25) einen Dichtring (57) aufweist, der im Inneren des Endabschnittes (26) des Gehäuses (13, 14) angeordnet ist und die Abdichtung zwischen diesem und dem zylindrischen Abschnitt (59) des zentralen Körpers sicherstellt sowie am Führungsring (56) festgelegt ist, und daß der zentrale Körper (19) eine Ringschulter (65) aufweist, die an dem Dichtring in der Ruhestellung des Servomotors anliegt.

FIG. 2

FIG. 3

FIG. 4

FIG_1